(19) Europäisches Patentamt
European Patent Office
Office européen des brevets

(11) EP 2 264 855 B1

(12) EUROPEAN PATENT SPECIFICATION

(45) Date of publication and mention of the grant of the patent:
**08.04.2020 Bulletin 2020/15**

(51) Int Cl.:
**G06F 1/26** (2006.01)     **H02J 7/00** (2006.01)

(21) Application number: **10181666.8**

(22) Date of filing: **20.02.2004**

(54) **Circuit and method of operation for an adaptive charge rate power supply**

Schaltung und Betriebsverfahren für ein Netzteil mit adaptativer Ladegeschwindigkeit

Circuit et procédé de fonctionnement d'une alimentation électrique à taux de charge adaptatif

(84) Designated Contracting States:
**AT BE BG CH CY CZ DE DK EE ES FI FR GB GR HU IE IT LI LU MC NL PT RO SE SI SK TR**

(30) Priority: **21.02.2003 CA 2419497**
**21.02.2003 US 372446**

(43) Date of publication of application:
**22.12.2010 Bulletin 2010/51**

(60) Divisional application:
**20158210.3**

(62) Document number(s) of the earlier application(s) in accordance with Art. 76 EPC:
**04712981.2 / 1 595 203**

(73) Proprietor: **BlackBerry Limited**
**Waterloo, ON N2K 0A7 (CA)**

(72) Inventors:
- **Veselic, Dusan**
  **Waterloo Ontario N2L 3W8 (CA)**
- **Habicher, Michael F.**
  **Waterloo Ontario N2L 3W8 (CA)**
- **Malton, Jonathan T.**
  **Waterloo Ontario N2L 3W8 (CA)**
- **Idzik, Jacek**
  **Waterloo Ontario N2L 3W8 (CA)**

(74) Representative: **Hanna Moore + Curley**
**Garryard House**
**25/26 Earlsfort Terrace**
**Dublin 2, D02 PX51 (IE)**

(56) References cited:
US-A- 5 723 970     US-A1- 2002 130 638
US-B1- 6 300 744     US-B1- 6 507 173
US-B1- 6 522 118

- "Linear Li-Ion Charger with termination in ThinSOT", LTC4056-4.2 LINEAR LI-ION CHAGER WITH TERMINATION IN THINSOT , April 2003 (2003-04), pages 1-16, XP002279448, USA Retrieved from the Internet: URL:www.linear.com/pdf/405642f.pdf [retrieved on 2004-05-10]
- "LTC 4053-4.2 USB Compatible Lithium-Ion Battery Charger with thermal Regulation", USB COMPATIBLE LITHIUM-ION BATTERY CHARGER WITH THERMAL REGULATION , 2001, page 1-16, XP002282651, USA Retrieved from the Internet: URL:http://www.linear.com/pdf/4053f.pdf [retrieved on 2004-05-28]
- "Digitally Programmable 1A Switch-Mode USB/AC Li-Ion Charger IC Sets Records for Charge Time, Power Dissipation and Size", INTERNET CITATION, 1999, XP003014133, Retrieved from the Internet: URL:http://www.summitmicro.com/comp_info/press/022106/pr022106.htm [retrieved on 2007-01-01]
- LYNN K: "UNIVERSAL SERIAL BUS (USB) POWER MANAGEMENT", WESCON CONFERENCE, IEEE CENTER, HOES LANE, US, 15 September 1998 (1998-09-15), pages 194-201, XP000846817, ISSN: 1044-6036

EP 2 264 855 B1

**Description**

<u>TECHNICAL FIELD</u>

This invention relates in general to battery chargers, and more specifically to a method and apparatus for charging a battery in a portable communication device from a variety of power sources, including limited capacity sources such as an integral power node of a computer data bus. One such computer data bus would be a USB (universal serial bus) port.

<u>BACKGOUND ART</u>

With the current computing and information revolution, portable electronic devices such as cellular telephones, personal digital assistants (PDAs), digital pagers and wireless email devices, are becoming very common.

These portable devices are typically powered by internal batteries which must be recharged periodically by an external power source, using a battery charger. Battery chargers generally receive power from a standard AC electrical outlet and convert the AC power into a low DC voltage for recharging a battery.

The battery chargers of these portable devices also generally employ a "battery charge controller" to manage the charging of the battery. Such battery charge controllers offer functionality such as:

- regulating the voltage and current levels to the rechargeable battery;
- providing status signals to the main processor of the portable device, or operating one or more status LEDs (light emitting diodes);
- providing protection circuits such as overcurrent, undervoltage, and overtemperature protection; and
- shutting themselves off when the charging source has been removed, to minimize battery drain.

Unfortunately, most of these battery charge controllers are designed to draw from a high capacity power supply with a steady voltage that will not sag appreciably under its current demands. This is a problem when one attempts to use a power supply with limited capacity or when the power is delivered via unknown length and gauge of power wires (the resistance of such power wires cause a voltage drop which aggravates the problem). Some computer data buses such as USB (universal serial bus) buses can be used to provide power to external devices, but while such power supplies are very convenient, they have limited capacity and are delivered via standard USB cables whose power wires could vary in length and gauge (anywhere from 20AWG - 28AWG, for example).

The majority of personal computers (PCs) and laptop computers available today, are provided with one or more USB ports as standard components. USB ports are designed to support data communication at speeds of 12 megabits and 1.5 megabits per second (USB 2.0 provides for up to 480 megabits per second), support PnP (Plug and Play) installation software, and support hot plugging (i.e. devices can be connected and disconnected while the PC is running). Thus, USB ports are often used as interfaces to connect keyboards, mouses, game controllers, printers and scanners to PCs.

As well, USB ports are able to supply limited power to a connected device. The standard USB specification requires that "high-power" USB ports be operable to provide a supply voltage of 4.75 - 5.25 VDC and supply a maximum current of at least 500mA (five units). The specification for "low-power" USB ports requires a supply voltage of 4.40 - 5.25 VDC and current of 100 mA (one unit).

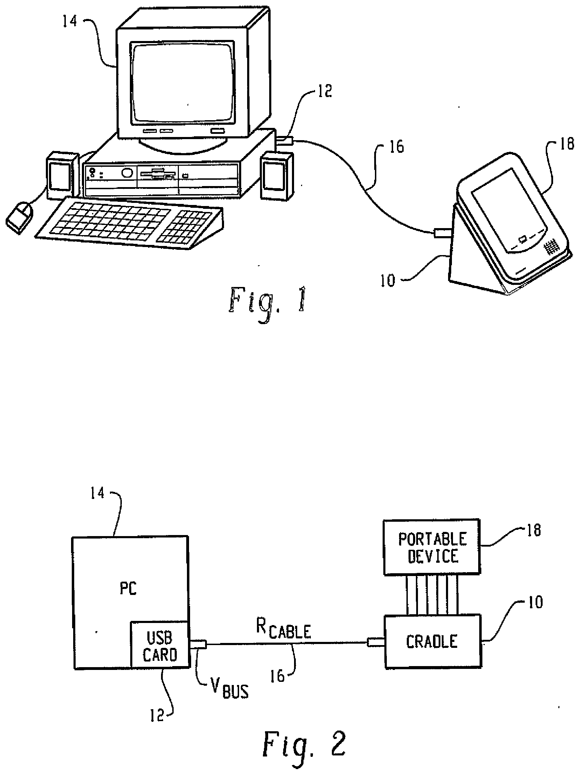

USB ports would seem to be a very logical choice as a power supply for portable devices for a number of reasons. To begin with, USB ports supply a low DC voltage supply which is often very close to, or just above, the voltage of the battery being charged (many portable devices having battery voltages in the range of 2.5 - 4.5 VDC). As well, many portable devices may be operable to upload and download data or software, to and from a personal computer or a laptop computer (often referred to as "syncing"). Thus, many portable devices are supplied with docking cradles as shown in the system diagram of **Figure 1**. This is quite a straightforward system, as the docking cradle **10** is connected to a USB port **12** of a personal computer (PC) **14,** via a simple USB cable and connectors **16**. The mobile device **18** need only be placed into the docking cradle **10** and an electronic connection to the (PC) **14,** is made.

If the USB port **12** has sufficient power, it makes much more sense to use the USB port **12** to supply charging power to the mobile device **18,** rather than using a separate AC charger. For example:

- a USB power supply will have less electrical noise than an AC charger, unless the AC charger incorporates large DC capacitors or inductors;
- an AC charger requires either a heavy transformer or an expensive switching power supply current, neither of which would be required if USB power is used;
- in the USB power supply implementation, the cable and connectors **16** used to connect the docking cradle **10** to

2

the PC **14** could be used to carry both power and data, so no extra physical components would be required at all. In contrast, an AC power supply would have to be provided as a separate physical component, and

- there are no universal standards for AC power supplies ; a given AC power supply may require 120VAC or 240VAC as an input, and may provide 3, 4.5 ,6, 7.5 or VDC out, with one of large number of different possible connectors and polarities.

A traveller who forgets an AC power supply at home, may not be able to find a replacement.

In contrast, the USB standard is widely accepted, so that a traveller whose mobile device is equipped with a USB connector will have a much greater chance of finding a charging source.

Unfortunately, USB ports can only provide limited power, while typical battery charge controllers are designed to receive a steady, high capacity power supply (that is, the input voltage at the battery charge controller is at or near its designed value, and does not drop as charging current increases). The problem becomes clear when considering the block diagram of **Figure 2.** The components of **Figure 2** are the same as those of **Figure 1,** specifically, a docking cradle **10** powered from a USB port **12** of a PC **14,** via cable and connectors **16,** and feeding a portable device **18** resting in the cradle **10.** From this presentation, it is clear that the voltage output from the USB port **12,** $V_{USB}$, will drop as it crosses the cable and connectors **16,** due to its resistance $R_{CABLE}$. If either the cable resistance ($R_{CABLE}$) or the current drawn ($I_{CABLE}$) is too great, the voltage arriving at the battery charge controller in the mobile device **18** may be too low. This low voltage will cause many standard battery charge controllers either to shut down or to oscillate and fail to charge the battery in the portable device **18** efficiently.

True, new dedicated battery charge controllers could be developed which are operable with the limited USB power supply and resistance of the cable and connector system, but that would be an expensive and complicated solution. Such a design would become even more complicated to be compatible with both computer data bus power supplies and other power sources, such as AC power supplies.

U.S. Patent No. 6,300,744 B1 discloses the following:

Where an AC adapter is used to supply power to both an electronic device such as a notebook computer and a rechargeable battery, as where the computer is turned on while the battery is being recharged, the voltage at the output terminal of the AC adapter is detected and delivered to a battery charger that is used to supply a constant current to the battery. When the current from the AC adapter exceeds its rated current, the voltage at the output terminal begins to fall. When the output voltage falls below a predetermined trigger voltage, the voltage detector instructs the battery charger to limit the current delivered to the battery, and the current is reduced until the voltage at the output of the AC adapter again reaches the trigger voltage. This arrangement provides for a maximum use of the power available from the AC adapter when the combined power demands of the electronic device and the battery exceed the power delivery capability of the AC adapter.

U.S. Patent Pub. No. 2002/0130638 A1 discloses the following: Universal serial bus powered battery charger primarily intended for use in battery powered hand-held and other portable devices to charge the battery or batteries within the battery powered device when the same is connected to a host device, powered hub or a bus powered hub through a universal serial bus (USB) port. The battery charger includes one or more current limits to conform to the universal serial bus current supply limit set in the USB specification. Any of the universal serial bus voltage and current limits may be used to charge batteries in the battery powered device, such as single cell lithium-ion batteries. Various features are disclosed.

Linear Technology USB Compatible Lithium-Ion Battery Charger with Thermal Regulation (LTC4053-4.2) discloses the following:

The LTC®4053 is a standalone linear charger for lithium ion batteries that can be powered directly from a USB port. The IC contains an on-chip power MOSFET and eliminates the need for an external sense resistor and blocking diode. Thermal regulation automatically adjusts charge current to limit die temperature during high power or high ambient temperature conditions. This feature protects the end product and the LTC4053 from thermal stress while the IC charges the battery at maximum rate without interruption. The charge current and charge time can be set externally with a single resistor and capacitor, respectively. When the input supply (wall adapter or USB supply) is removed, the LTC4053 automatically enters a low current sleep mode, dropping the battery drain current to less than $5\mu A$. The LTC4053 also includes NTC temperature sensing, C/10 detection circuitry, AC present logic, low battery charge conditioning (trickle charging) and shutdown ($25\mu A$ supply current). The LTC4053 is available in 10-pin thermally enhanced MSOP and low profile (0.75mm) DFN packages.

There is therefore a need for a method and apparatus which allows standard battery charge controllers to be supplied with power from standard computer data busses such as USB ports. This design must be provided with consideration for the cost of electrical components, the limited physical board area in portable devices, the reliability and the complexity of the design. It is also desirable that this method and apparatus be operable with both computer data bus power supplies, and other power sources such as AC power supplies.

## DISCLOSURE OF THE INVENTION

The invention is set out in the claims.

It is therefore an object of the invention to provide a novel method and apparatus which allows standard battery charge controllers to be supplied from standard computer data ports and other power sources, which obviates or mitigates at least one of the disadvantages of the prior art.

One aspect of the invention is broadly defined as a battery charging circuit which adjusts to the parameters of an external power supply, to minimize charge time, comprising: a battery charge controller connected to the external power supply and electrifying a battery; and a regulating circuit for maximising the current drawn by the battery charge controller while keeping the voltage to the battery charge controller above a preset minimum limit, the present minimum limit corresponding to a low voltage shut of level for the battery charge controller.

Another aspect of the invention is broadly defined as a method for charging a battery of a portable device via an external power supply, which adjusts to the parameters of the external power supply to minimize charge time, the method comprising the steps of: connecting a battery charge controller to the external power supply and to a rechargeable battery in the portable device; determining a low voltage shut off level for the battery charge controller; monitoring the voltage that the external power supply provides to the battery charge controller; and maximising the current drawn by the battery charge controller, while keeping the voltage to the battery charge controller above the low voltage shut off level for the battery charge controller.

## BRIEF DESCRIPTION OF THE DRAWINGS

These and other features of the invention will become more apparent from the following description in which reference is made to the appended drawings in which:

Figure 1 presents a physical layout of a personal computer connected to a portable electronic device in a manner known in the art;

Figure 2 presents a block diagram of the system presented in Figure 1, highlighting the problem of voltage drop between the personal computer and the portable electronic device;

Figure 3 presents an electrical schematic diagram of a battery charging circuit in a broad embodiment of the invention;

Figure 4 presents an electrical schematic diagram of a battery charging circuit using a comparator, in an embodiment of the invention;

Figure 5 presents an electrical schematic diagram of a battery charging circuit using an electronic potentiometer, in an embodiment of the invention;

Figure 6 presents a timing diagram of charging current provided by the embodiment of Figure 5; and

Figure 7 presents an electrical schematic diagram of a battery charge circuit in an embodiment of the invention.

## BEST MODE FOR CARRYING OUT THE INVENTION

The general problem addressed by the invention is that typical battery charge controllers are designed to receive a steady, high capacity power supply while such a power supply is often unavailable, or is simply inconvenient. One of the most common battery charge controllers, for example, the LTC1734 from Linear Technology is designed to receive 5 VDC in, and has a low voltage lockout at 4.53V (that is, if the LTC1734 receives a supply voltage of less than 4.53VDC, it simply shuts down). When the voltage drop across the supply cable and connectors 16 are considered, the voltage supplied by the power node of a data bus such as a USB port, may be lower than this low voltage lockout. Therefore, though the LTC1734 is widely available, inexpensive and reliable, it cannot be used effectively in this environment.

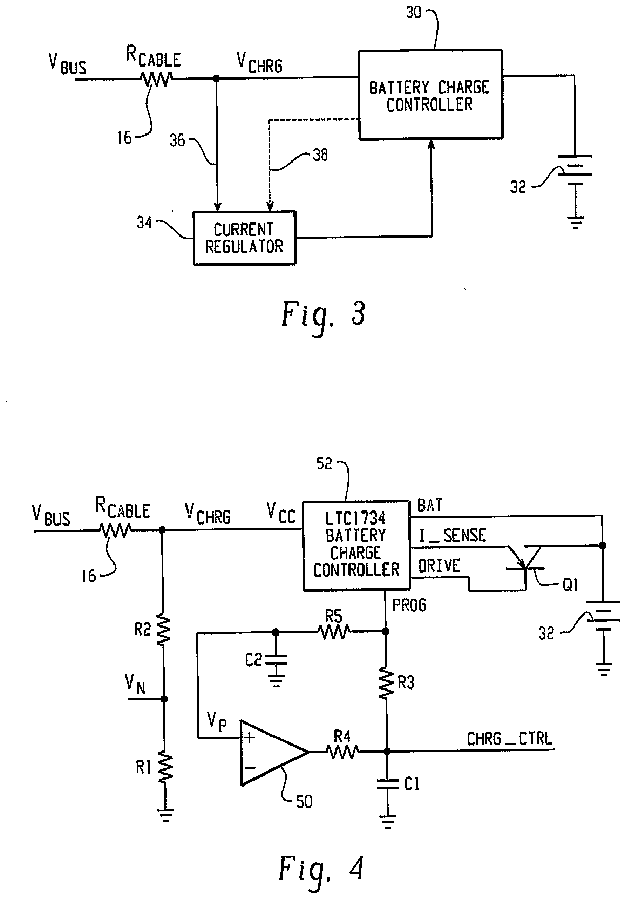

A circuit which overcomes this problem, is presented as a block diagram in Figure 3. This figure presents a battery charging circuit which uses a standard battery charge controller 30 known in the art, coupled to a rechargeable battery or batteries 32. The battery charge controller 30 is provided with power from some manner of external power, such as a computer data bus. This power connection is presented in Figure 3 in the form of input voltage $V_{BUS}$. This $V_{BUS}$ voltage will be reduced due to the resistance of the electrical cable and connectors 16, $R_{CABLE}$. Thus, the battery charge controller 30 only receives a voltage of $V_{CHRG} = V_{BUS} - (R_{CABLE} \times I_{CABLE})$.

As will be explained in greater detail hereinafter, the voltage drop across $R_{CABLE}$ may result in the $V_{CHRG}$ voltage being lower than the low voltage threshold for the battery charge controller 30. The invention therefore adds a current regulator 34 to the circuit. The resistance $R_{CABLE}$ is of course fixed, but by reducing the current drawn by the battery charge controller 30, $I_{CABLE}$, the voltage drop across $R_{CABLE}$ will decrease, thus avoiding the low voltage shut off of the battery charge controller 30, and allowing the battery 32 to be charged.

A number of current regulators 34 are described herein, but in general it desirable that the current regulator:

- maximize the current being fed to the battery **32,** and therefore maximizing the current drawn from the power supply ($I_{CABLE}$), while
- keeping the $V_{CHRG}$ voltage greater than the low voltage shut off level of the battery charge controller **30.**

In some embodiments of the invention the current regulator **34** uses $V_{CHRG}$ as an input (via connection **36**), while in other embodiments the current regulator **34** uses an output of the battery charge controller **30** (via connector **38**). Still other embodiments use no feedback to the current regulator **34.**

Say, for example, that the voltage provided from the computer data bus is 4.75 - 5.25 VDC; that is, $V_{BUS}$ = 4.75 - 5.25 VDC; the circuit must therefore be designed to operate at $V_{BUS}$ = 4.75 VDC. Suppose also that the resistance of the cable and connectors **16** is 0.5 ohms ($R_{CABLE}$ = 0.5 ohms) and that the low voltage shut off of the battery charge controller **30** is 4.53 VDC. The battery charge controller **30** will endeavour to draw as much current as needed to charge the battery **32,** which, in the case of a USB bus, will be limited to about 0.5 A. Thus, the voltage arriving at the battery charge controller, $V_{CHRG}$, will be:

$$V_{CHRG} = V_{BUS} - R_{CABLE} \times I_{CABLE} \qquad (1)$$
$$= 4.75 \text{ VDC} - (0.5 \text{ ohms} \times 0.5 \text{ A})$$
$$= 4.5 \text{ VDC}$$

If the low voltage shutdown of the battery charge controller is higher than $V_{CHRG}$ = 4.5 VDC, it will therefore shutdown. This is the case for the LTC1734 controller, for example, which shuts down at 4.53 VDC.

The above calculations did not even take into account component tolerances, which cannot be ignored. The LTC1734 application notes state that this device has a tolerance of 1%. If the current regulator **34** incorporates a number of simple components then the circuit of **Figure 3** may easily have a tolerance of 3% or so. Thus, $V_{CHRG}$ may effectively be in the range of 4.37 VDC; well below the 4.53 VDC cut off for the LTC1734 battery charge controller.

Equation (1) can also be used to determine a current level, $I_{CABLE}$, which does not cause the battery charge controller **30** to shutdown:

$$V_{CHRG} = V_{BUS} - R_{CABLE} \times I_{CABLE} \qquad (1)$$

$$I_{CABLE} = (V_{BUS} - V_{CHRG}) / R_{CABLE} \qquad (2)$$
$$= (4.75 - 4.53) / 0.5$$
$$= 0.44 \text{ A}$$

Thus, reducing the current $I_{CABLE}$ to 0.44 A is sufficient to avoid the low voltage shut off of the battery charge controller **30.** Allowing for 3% tolerance:

$$I_{CABLE} = (V_{BUS} - V_{CHRG} \times 3\%) / R_{CABLE} \qquad (2)$$
$$= (4.75 - 4.53 \times 1.03) / 0.5$$
$$= (0.09) / 0.5$$
$$= 0.18 \text{ A}$$

That is, the current $I_{CABLE}$ may have to be reduced to 0.18 A to avoid the low voltage shutdown.

Thus, the use of the circuit in **Figure 3** allows computer data buses and similar power supplies with limited capacity, to be used to charge mobile devices, without causing the battery charge controller **30** to shut down.

The solution of this embodiment adapts to the capabilities of any external power source to minimize charge time. If, for example, 5 VDC arrives at the input of the battery charge controller **30** with unlimited current and no voltage drop as the current draw increases, then the regulating circuit **34** will not restrict the current drawn.

A number of different embodiments will now be described. Each embodiment uses a very small number of simple, reliable components. Thus, as a whole, the invention provides an effective solution which is inexpensive, reliable and consumes minimal board space in a portable device.

**Comparator Embodiment**

**Figure 4** presents an electrical schematic diagram charging circuit which employs two main components: a comparator **50** and a LTC1734 battery charge controller **52** having a current control pin PROG. Varying the current drawn through the control pin PROG will vary the current supplied by the LTC1734 battery charge controller **52** to the battery **32.** Drawing more current out of the PROG pin will increase the charge current, while reducing the PROG current will reduce the charge current.

Many battery charge controllers have a similar current control system, but this embodiment will be described with respect to the LTC1734 controller. The LTC1734 controller can be operated in either constant current mode, or constant voltage mode.

In the constant voltage mode (entered when the charge voltage of the battery **32** reaches 4.2 VDC externally), the LTC1734 controller **52** servos its DRIVE pin to maintain its BAT pin at 4.2 VDC. In this mode, the current provided by the LTC1734 controller **52** will necessarily drop, and the current flowing out of the PROG pin will drop accordingly. As this latter mode of operation is not affected by the system described herein, it will not be discussed in any further detail.

As noted above, the minimum required voltage at VCC for proper operation of the LTC1734 controller **52** is 4.53 VDC, and the USB specification states that for standard USB equipment under a high load (i.e. 500mA), $V_{CHRG}$ may be pulled as low as 4.35V - too low for the LTC1734 controller **52** to operate. To prevent this, the comparator **50** monitors $V_{CHRG}$ (scaled down to a more useful voltage - $V_N$ - by the voltage divider R1 and R2) fed to the inverting input of the comparator **50** and compares it to a reference voltage ($V_P$) which is fed to the comparator **50**'s non- inverting input.

$V_P$ is derived by low-pass filtering the LTC1734 controller **52**'s PROG pin output through resistor R5 and capacitor C2, as $V_{PROG}$= 1.5 VDC when the LTC1734 controller **52** is operating in the constant-current mode. R5 also serves to isolate other components from the LTC1734 controller **52,** ensuring proper operation of the LTC1734 controller **52.** Resistors R1 and R2 are chosen such that $V_{CHRG}$ is a suitable tolerance above 4.53 VDC when $V_N$ = 1.5 VDC.

In the intended and published usage of the LTC1734 controller **52,** the voltage across resistor R3 is simply $V_{PROG}$ since R3 is intended to be tied between PROG and ground. In such a configuration, determining and setting a fixed charge current $I_{CHRG}$, is straightforward. In the system of the invention, rather than adjusting R3 to control charge current as most alternative ideas suggest, this circuit adjusts the voltage across a fixed R3 by changing the voltage across C1 (that is, $V_{C1}$) such that:

$$I_{CHG} = \frac{1.5V - V_{C1}}{R3} \times 1000$$

$$(3)$$

$V_{C1}$ is controlled by the comparator **50**. As the comparator **50** is an open- drain comparator (a MAX9120 comparator was used for testing purposes, though similar parts such as the LMV7235 should work as well), when $V_N >$ $V_P$, the comparator **50** will sink current into its output pin; otherwise the output pin will float.

The control loop operates as follows:

1. as $I_{CHRG}$ drops, the voltage drop across the cable and connectors **16** also drops, so $V_{CHRG}$ rises, per equation (1) above. As $V_{CHRG}$ rises, the positive input to the comparator **50,** $V_N$, will also rise. For $V_N$ rising, when $V_N > V_P$ + 0.5 $V_{HYS}$ ($V_{HYS}$ being the input hysteresis for the comparator **50**), the comparator **50** will turn on its output and pull charge out of C1, decreasing $V_{C1}$ and causing $I_{CHRG}$ to increase;

2. as $I_{CHRG}$ increases, the voltage drop across the cable and connectors **16** rises, causing $V_{CHRG}$, and consequently $V_N$, to drop. For $V_N$ falling, when $V_N < V_P$ - 0.5 $V_{HYS}$, the comparator **50** turns off its output, allowing the LTC1734 controller **52**'s PROG pin to pour charge into C1, causing $V_{C1}$ to increase and decreasing $I_{CHRG}$. Resistor R4 smooths out the ripples on C1 and limits current transients through the comparator **50**'s output.

When the power supply is capable of supplying all the power the LTC1734 controller **52** can handle, $V_{C1}$ will be at a minimum and $I_{CHG}$ will be approximately determined by:

$$I_{CHG} = \frac{1.5V}{R3 + R4 + R_{OUT}}$$

$$(4)$$

$R_{OUT}$ is the resistance from the comparator **50**'s output to GND when the output is active. Because the LTC1734 controller **52** is susceptible to malfunction due to capacitive effects in the PROG circuit, it is best to keep R4 ≤ 0.1R3, but this will depend on the application, and can easily be determined by one skilled in the art.

When power is first applied to this circuit through $V_{BUS}$, $V_{C1}$ = 0 and the charger will start and stay on. A high-on-reset signal of 3.0V applied to CHG_CTRL will keep the charger off; once the "off' state has been established, the CHG_CTRL signal can be removed. Conversely, pulling CHG_CTRL to GND for a period of time and then floating it will turn on the charger.

**Testing of Comparator Embodiment**

The circuit of **Figure 4** was tested with the following component values:

R1 = 10.0KΩ

R2 = 21.0kΩ

R3 = 3.09kΩ

R4 = 200Ω

R5 = 10.0KΩ

C1 = 1μF

C2 = 0.1μF

The R4, C1 time constant was chosen to be at least 10 times larger than the propagation delay of the MAX9120 for stability.

For testing purposes, a 1Ω resistor was used to simulate the resistance of the supply cable and connectors **16.**

With $V_{BUS}$ = 6 VDC, $I_{CHRG}$ = 440mA.

As $V_{BUS}$ was gradually reduced, $I_{CHRG}$ remained at 440mA until $V_{BUS}$ = 5.075 VDC, at which point $I_{CHRG}$ started to drop. By the time $V_{BUS}$ = 4.71 VDC, the charge current $I_{CHRG}$, had dropped to 92mA.

Using an HP54645D oscilloscope to probe the LTC1734 controller **52**'s VCC pin showed the following:

- for $I_{CHRG}$ = 440mA and $V_{BUS}$ = 5.075 VDC, VCC = 4.63 VDC; and
- for $I_{CHRG}$ = 92mA and $V_{BUS}$ = 4.71 VDC, VCC = 4.63 VDC.

This is consistent with the chosen values of R1 and R2, using the PROG reference scheme.

With $V_{BUS}$ = 4.63 VDC, the LTC1734 controller **52** turned off and $V_{PROG}$ = 4.625 VDC.

By returning $V_{BUS}$ to 6 VDC, the LTC1734 controller **52** could be turned on again by momentarily pulling CHG_CTRL to GND. Similarly, pulling CHG_CTRL above about 2.25 VDC turned the LTC1734 controller **52** back off.

**Digital Potentiometer Embodiment**

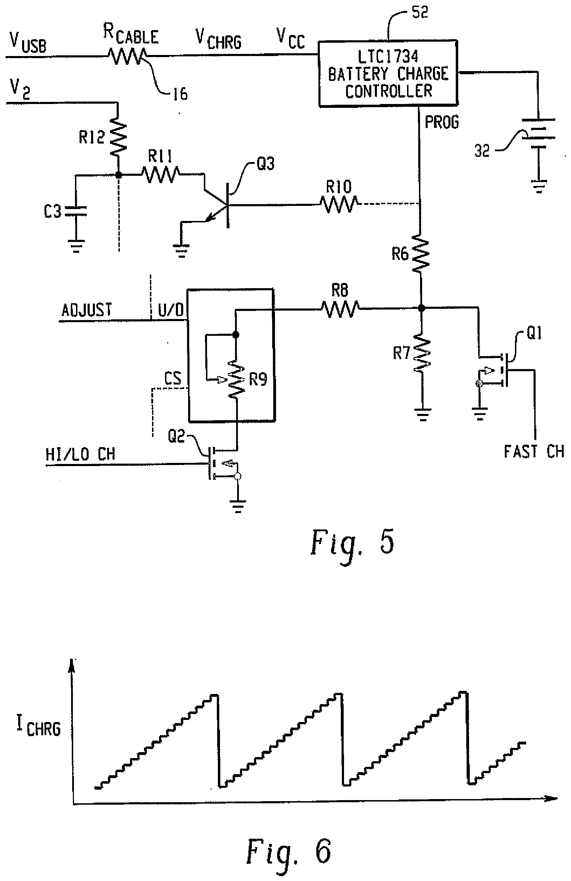

The invention is not strictly limited to the case where the low voltage threshold is never exceeded. In the embodiment of **Figures 5** and **6,** for example, the low voltage threshold could be exceeded with each periodic cycle of current ramping, but the duty cycle still be sufficient to charge the battery. The only difficulty with such a circuit is that it would be necessary to reset the battery charge controller with each cycle. The circuit of **Figures 5** and **6** ramps through a range of current supply, but uses a reset circuit to stop the ramping before the low voltage threshold is exceeded.

Like the embodiment of **Figure 4,** this circuit uses the LTC1734 battery charge controller **52,** though other battery charge controllers having a current control pin PROG could also be used. However, rather than having a comparator circuit as in Figure 4 which modulates the current draw to avoid the low voltage shut off, this circuit ramps from a low current level, through to a high current level. Before the low voltage threshold is reached, the LTC1734 controller **52** shuts down and the cycle is repeated. The circuit also includes provisions for setting the current draw to a number of predetermined and fixed levels.

Looking first at the simplest case, with the inputs FAST CH, HI/LO CH and ADJUST all at 0 VDC, then there will be no current flow through either of the semiconductors Q2 or Q3. The resistance between PROG and ground will therefore be equal to the sum of resistors R6 and R7, and this will determine the current flow through the LTC1734 controller **52.** If these resistors are set to 2.2kohms and 16.5Kohms respectively, then the circuit will provide 100mA.

If the FAST CH is held high, then current will flow through R6, and the resistance from PROG to ground will only be 2.2kohms. Thus, the current flow through the LTC1734 controller 52 will be approximately 750mA. This setting would not be useful with a low capacity supply such as a USB port, but could be used with a high capacity supply such as an AC transformer.

Finally, with the HI/LO CH input high, current will flow through resistor R8, electronic potentiometer R9, and Q2. Resistor R8 preferably has a value of 1kohm, and R9 is preferably a MAX5467 potentiometer, which has a range of 0 - 10kohms, in 32 discrete steps. Thus, this circuit will step through a resistance of 11kohms down to 1kohm in 32 discrete steps (note that this circuit is in parallel to R7, so R7 must be considered in determined the current drawn from PROG). This would result in the current output similar to that shown in **Figure 6** (the number of steps that would actually be made prior to reaching the low voltage shut off varies with the particular application due to component values and tolerances, and other factors),

The ADJUST and HI/LO CH inputs could be controlled using a microcontroller or similar device. As well, hardware components such as an oscillator could also be used to control the rate through which the steps of the potentiometer are stepped.

In the preferred embodiment of the invention, the HI/LO CH input also feeds the CS pin on the MAX5467. This is a "chip select" input - in combination with U/D input fed by the ADJUST input, it is used to increment or decrement the electronic potentiometer R9. Also, a separate reset circuit is provided using resistors R10, R11, R12, capacitor C3, and transistor Q3. This circuit could be powered using any reliable voltage V2 (in the preferred embodiment, V2 = +3.3 VDC, which is provided from $V_{USB}$ and a voltage regulator).

The preferred values for the components in this circuit are:

    R6 = 2.2kohms
    R7 = 16.5kohms
    R8 = 1.0kohms
    R9 = 10kohms
    R10 = 200.0kohms
    R11 = 10.0kohms
    R12 = 200kohms
    C3 = 22 pF

**Software Embodiments**

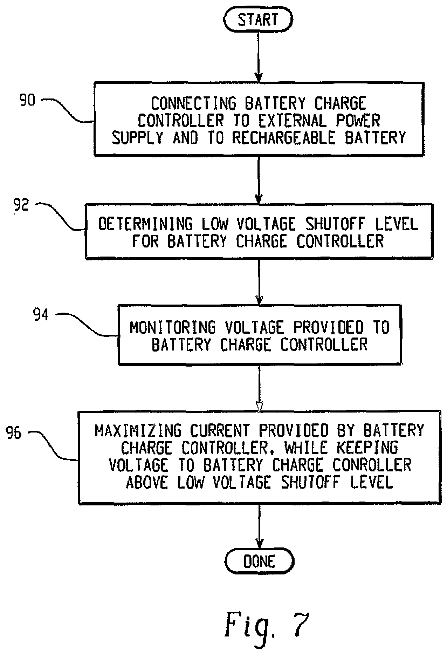

Rather than using only electronic hardware as shown above, the invention may: also be implemented using a combination a hardware and software components, including programmable devices such as digital signal processors (DSPs), microcontrollers, field programmable gate arrays (FPGAs), application specific integrated circuits (ASICs) and the like. Such an embodiment could be implemented as shown in the flow chart of **Figure 7.**

Like the embodiments described above, this method could be used to charge any rechargeable battery in a portable or similar electronic device, Any external power supply could be used, though the invention is most useful with power supplies of limited capacity. The method of the invention adjusts to the parameters of external power supplies to minimize charge time.

As shown in **Figure 7,** the method of the invention begins at step **90** by connecting a battery charge controller **30** to the external power supply and to the rechargeable battery in the portable device **18.** As described herein above, the connection to the external power supply is preferably made via a USB cable and connectors **16,** and a cradle **10** to hold the portable device **18.**

A low voltage shut off level for the battery charge controller in the portable device **18** is then determined at step **92.** This low voltage shut off level is generally predetermined as the software algorithm is executed by the portable device **18,** and the parameters of the battery charge controller **30** being used in the portable device **18** can be programmed into it.

The voltage provided by the external power supply to the battery charge controller **30** is then monitored at step **94.** This step could be provided periodically, continuously, or in response to an event, such as a change in the charge current. Various devices, such as microcontrollers, are often provided with integral ADCs (analogue to digital converters) which could be used to perform this monitoring function.

The current drawn by the battery charge controller **30** is then maximized at step **96,** with the limitation that the voltage being supplied to the battery charge controller **30** must be kept above the low voltage shut off level. The current drawn by the battery charge controller **30** could be controlled in a number of manners. For example, most microcontrollers have DAC (digital to analogue converter) outputs which could be used to control the current provided by a device such as the LTC1734 controller **52,** described herein above.

The balance of the software code needed to perform this algorithm would be straightforward to one skilled in the art.

The method steps of the invention may be embodiment in sets of executable machine code stored in a variety of formats such as object code or source code, integrated with the code of other programs, implemented as subroutines, by external program calls or by other techniques as known in the art.

Even the hardware embodiments of the invention could be encoded in a software form such as the hardware development languages (HDL code) used to fabricate integrated circuits. This HDL or similar code could be stored on any electronic memory means such computer diskettes, CD-Roms, Random Access Memory (RAM) and Read Only Memory (ROM). As well, electronic signals representing this software code may also be transmitted via a communication network.

## Options and Alternatives

While particular embodiments of the present invention have been shown and described, it is clear that changes and modifications may be made to such embodiments without departing from the scope of the invention. For example:

1. the circuit of the invention could be used with any manner of power source including: conventional AC power supplies (often referred to as "bricks"), computer data busses such as USB ports, external battery packs, laptop power supplies, DC outlets on aircraft;
2. any manner of electrical appliance could be charged with such a circuit Including portable laptop computers, personal digital assistants (PDAs), cellular telephones, wireless email and paging devices; and
3. any manner of rechargeable battery could be used including single or multiple lithium-ion, nickel-cadmium, or other types of cells.

Again, such implementations would be clear to one skilled in the art from the teachings herein, and do not take away from the invention.

## INDUSTRIAL APPLICABILITY

The present Invention provides to a method and apparatus for charging a battery In a portable communication device from a variety of power sources.

## Claims

1. A portable communication device, comprising:

   a rechargeable battery (32); and
   a battery charging circuit coupled to the rechargeable battery and configured to receive power from an external power source and use the power from the external power source to charge the rechargeable battery, the battery charging circuit including:

   a battery charge controller (30) configured to receive power, at an input voltage, from the external power source, and use the power to charge the rechargeable battery, the battery charge controller requiring that the input voltage remain above a low voltage shut-off level when charging the rechargeable battery, wherein an input voltage less than or equal to the low voltage shut-off level causes the battery charge controller to shut down; and
   a regulating circuit (34) configured to regulate the current drawn by the battery charge controller (30) in response to the input voltage, to maintain the input voltage above the low voltage shut-off level.

2. The portable communication device of claim 1, wherein the regulating circuit (34) is further configured to maximize a current drawn by the battery charging circuit from the external power source.

3. The portable communication device of claim 1, wherein the regulating circuit (34) includes:
   a comparator circuit (50) configured to receive (i) a voltage signal from the input voltage and (ii) a reference voltage signal, and to modulate the current drawn by the battery charging circuit based on a difference between the voltage signal and the reference voltage signal.

4. The portable communication device of claim 1, wherein the regulating circuit (34) includes:

an electronic potentiometer configured to vary a resistance in response to a control signal from a microprocessor in the portable communication device, wherein the resistance is varied to increase or decrease the current drawn by the battery charging circuit.

5. The portable communication device of claim **4,** wherein the electronic potentiometer incrementally decreases the resistance in response to control pulses from the microprocessor, thereby incrementally increasing the current drawn by the battery charging circuit.

6. The portable communication device of claim **4,** wherein the electronic potentiometer is configured to cyclically ramp the resistance through a range of resistances, thereby cycling the current drawn by the battery charging circuit through a range of about 0 Amps to a current level that results in an input voltage at the low voltage shut-off level.

7. The portable communication device of claim **3,** wherein the reference voltage signal is provided by the battery charge controller (30).

8. The portable communication device of claim **3,** wherein the comparator circuit (50) includes a voltage divider circuit for deriving the voltage signal by scaling down the input voltage.

9. The portable communication device of claim **3,** wherein the regulating circuit (34) includes a capacitor coupled between an output of the comparator circuit (50) and a ground potential, and operable to smooth variances in the output of the comparator circuit.

10. The portable communication device of claim **1,** wherein the external power source includes a computer bus having a power node.

11. The portable communication device of claim **10,** wherein the computer data bus is a universal serial bus (*35*) (USB).

12. The portable communication device of claim **3,** wherein the comparator circuit (50) has hysteresis, such that the comparator circuit (50) will not allow the battery charge controller (30) to charge the rechargeable battery until the input voltage is a predetermined amount above the low voltage shut-off level.

13. The portable communication device of claim **3,** wherein the comparator circuit (50) is configured to decrease the current drawn by the battery charging circuit when the input voltage drops below a preset reference level.

14. The portable communication device of claim **3,** wherein:

the battery charge controller (30) includes a low voltage shut-off circuit, the low voltage shut-off circuit being configured to cause the battery charge controller to stop charging the rechargeable battery (32) if the input voltage falls below the low voltage shut-off level; and
the regulating circuit (34) being configured to lower a current output of the battery charge controller if the input voltage falls below a preset limit, the preset limit being above the low voltage shut-off level.

15. A method for charging a rechargeable battery (32) of a portable communication device, the method comprising:

receiving, by a battery charge controller (30), power, at an input voltage, from an external power source;
using, by the battery charge controller, the power to charge the rechargeable battery;
requiring, by the battery charge controller, that the input voltage remain above a low voltage shut-off level when charging the rechargeable battery, wherein an input voltage less than or equal to the low voltage shut-off level causes the battery charge controller to shut down; and
regulating, by a regulating circuit (34), the current drawn by the battery charge controller (30) in response to the input voltage, to maintain the input voltage above the low voltage shut-off level.

**Patentansprüche**

1. Tragbare Kommunikationsvorrichtung, umfassend:

eine wiederaufladbare Batterie (32); und

eine Batterieladeschaltung, die mit der wiederaufladbaren Batterie gekoppelt ist und die konfiguriert ist, um Leistung von einer externen Leistungsquelle zu empfangen und die Leistung von der externen Leistungsquelle zu verwenden, um die wiederaufladbare Batterie zu laden, die Batterieladeschaltung beinhaltend:

eine Batterieladesteuerung (30), die konfiguriert ist, um Leistung bei einer Eingangsspannung von der externen Leistungsquelle zu empfangen und die Leistung zu verwenden, um die wiederaufladbare Batterie zu laden, wobei die Batterieladesteuerung erfordert, dass die Eingangsspannung beim Laden der wiederaufladbaren Batterie oberhalb eines Niederspannungsabschaltpegels bleibt, wobei eine Eingangsspannung, die geringer als oder gleich dem Niederspannungsabschaltpegel ist, bewirkt, dass die Batterieladesteuerung sich abschaltet; und
einen Regelkreis (34), der konfiguriert ist, um den Strom zu regulieren, der von der Batterieladesteuerung (30) in Reaktion auf die Eingangsspannung gezogen wird, um die Eingangsspannung oberhalb des Niederspannungsabschaltpegels zu halten.

2. Tragbare Kommunikationsvorrichtung nach Anspruch 1, wobei der Regelkreis (34) ferner konfiguriert ist, um einen Strom zu maximieren, der von der Batterieladeschaltung aus der externen Leistungsquelle gezogen wird.

3. Tragbare Kommunikationsvorrichtung nach Anspruch 1, wobei der Regelkreis (34) beinhaltet:
eine Vergleichsschaltung (50), die konfiguriert ist, um (i) ein Spannungssignal von der Eingangsspannung und (ii) ein Referenzspannungssignal zu empfangen und den Strom zu modulieren, der von der Batterieladeschaltung basierend auf einer Differenz zwischen dem Spannungssignal und dem Referenzspannungssignal gezogen wird.

4. Tragbare Kommunikationsvorrichtung nach Anspruch 1, wobei der Regelkreis (34) beinhaltet:
ein elektronisches Potentiometer, das konfiguriert ist, um einen Widerstand in Reaktion auf ein Steuersignal von einem Mikroprozessor in der tragbaren Kommunikationsvorrichtung zu variieren, wobei der Widerstand variiert wird, um den Strom, der von der Batterieladeschaltung gezogen wird, zu erhöhen oder zu verringern.

5. Tragbare Kommunikationsvorrichtung nach Anspruch 4, wobei das elektronische Potentiometer den Widerstand in Reaktion auf Steuerimpulse von dem Mikroprozessor schrittweise verringert und dadurch den Strom, der von der Batterieladeschaltung gezogen wird, schrittweise erhöht.

6. Tragbare Kommunikationsvorrichtung nach Anspruch 4, wobei das elektronische Potentiometer konfiguriert ist, um den Widerstand durch einen Bereich von Widerständen zyklisch zu rampen und dadurch den Strom, der von der Batterieladeschaltung gezogen wird, durch einen Bereich von etwa 0 Ampere auf einen Strompegel zu schalten, der zu einer Eingangsspannung bei dem Niederspannungsabschaltpegel führt.

7. Tragbare Kommunikationsvorrichtung nach Anspruch 3, wobei das Referenzspannungssignal von der Batterieladesteuerung (30) bereitgestellt wird.

8. Tragbare Kommunikationsvorrichtung nach Anspruch 3, wobei die Vergleichsschaltung (50) eine Spannungsteilerschaltung zum Ableiten des Spannungssignals durch Verringern der Eingangsspannung beinhaltet.

9. Tragbare Kommunikationsvorrichtung nach Anspruch 3, wobei der Regelkreis (34) einen Kondensator beinhaltet, der zwischen einem Eingang der Vergleichsschaltung (50) und einem Massepotenzial gekoppelt ist und der betreibbar ist, um Abweichungen bei der Ausgabe der Vergleichsschaltung zu glätten.

10. Tragbare Kommunikationsvorrichtung nach Anspruch 1, wobei die externe Leistungsquelle einen Computerbus beinhaltet, der einen Energieknoten aufweist.

11. Tragbare Kommunikationsvorrichtung nach Anspruch 10, wobei der Computerdatenbus ein universeller serieller Bus (35) (USB) ist.

12. Tragbare Kommunikationsvorrichtung nach Anspruch 3, wobei die Vergleichsschaltung (50) Hysterese aufweist, sodass die Vergleichsschaltung (50) der Batterieladesteuerung (30) nicht erlaubt, die wiederaufladbare Batterie zu laden, bis die Eingangsspannung eine vorbestimmte Höhe oberhalb des Niederspannungsabschaltpegels erreicht.

13. Tragbare Kommunikationsvorrichtung nach Anspruch 3, wobei die Vergleichsschaltung (50) konfiguriert ist, um den Strom, der von der Batterieladeschaltung gezogen wird, zu verringern, wenn die Eingangsspannung unter einen voreingestellten Referenzpegel fällt.

14. Tragbare Kommunikationsvorrichtung nach Anspruch 3, wobei:

die Batterieladesteuerung (30) eine Niederspannungsabsperrschaltung beinhaltet, wobei die Niederspannungsabschaltschaltung konfiguriert ist, um zu bewirken, dass die Batterieladesteuerung das Laden der wiederaufladbaren Batterie (32) stoppt, wenn die Eingangsspannung unter den Niederspannungsabschaltpegel fällt; und der Regelkreis (34) konfiguriert ist, um einen Ausgangsstrom der Batterieladesteuerung zu verringern, wenn die Eingangsspannung unter eine voreingestellte Grenze fällt, wobei die voreingestellte Grenze oberhalb des Niederspannungsabschaltpegels liegt.

15. Verfahren zum Laden einer wiederaufladbaren Batterie (32) einer tragbaren Kommunikationsvorrichtung, das Verfahren umfassend:

Empfangen von Leistung bei einer Eingangsspannung durch eine Batterieladesteuerung (30) von einer externen Leistungsquelle;
Verwenden der Leistung durch die Batterieladesteuerung, um die wiederaufladbare Batterie zu laden;
Erfordernis, durch die Batterieladesteuerung, dass die Eingangsspannung beim Laden der wiederaufladbaren Batterie oberhalb eines Niederspannungsabschaltpegels bleibt, wobei eine Eingangsspannung, die geringer als oder gleich dem Niederspannungsabschaltpegel ist, bewirkt, dass die Batterieladesteuerung sich abschaltet; und
Regulieren des Stroms, der von der Batterieladesteuerung (30) in Reaktion auf die Eingangsspannung gezogen wird, durch einen Regelkreis (34), um die Eingangsspannung oberhalb des Niederspannungsabschaltpegels zu halten.

**Revendications**

1. Dispositif de communication portable, comprenant :

une batterie rechargeable (32) ; et
un circuit de charge de batterie couplé à la batterie rechargeable et configuré pour recevoir de l'énergie provenant d'une source d'alimentation externe et utiliser l'énergie provenant de la source d'alimentation externe pour charger la batterie rechargeable, le circuit de charge de batterie comportant :

un contrôleur de charge de batterie (30) configuré pour recevoir de l'énergie, à une tension d'entrée, provenant de la source d'alimentation externe, et utiliser l'énergie pour charger la batterie rechargeable, le contrôleur de charge de batterie exigeant que la tension d'entrée reste au-dessus d'un niveau de coupure basse tension lors de la charge de la batterie rechargeable, dans lequel une tension d'entrée inférieure ou égale au niveau de coupure basse tension provoque l'arrêt du contrôleur de charge de batterie ; et
un circuit de régulation (34) configuré pour réguler le courant consommé par le contrôleur de charge de batterie (30) en réponse à la tension d'entrée, afin de maintenir la tension d'entrée au-dessus du niveau de coupure basse tension.

2. Dispositif de communication portable selon la revendication 1, dans lequel le circuit de régulation (34) est en outre configuré pour maximiser un courant consommé par le circuit de charge de batterie provenant de la source d'alimentation externe.

3. Dispositif de communication portable selon la revendication 1, dans lequel le circuit de régulation (34) comporte : un circuit comparateur (50) configuré pour recevoir (i) un signal de tension provenant de la tension d'entrée et (ii) un signal de tension de référence, et pour moduler le courant consommé par le circuit de charge de batterie sur la base d'une différence entre le signal de tension et le signal de tension de référence.

4. Dispositif de communication portable selon la revendication 1, dans lequel le circuit de régulation (34) comporte : un potentiomètre électronique configuré pour faire varier une résistance en réponse à un signal de commande provenant d'un microprocesseur dans le dispositif de communication portable, dans lequel la résistance est modifiée pour augmenter ou diminuer le courant consommé par le circuit de charge de batterie.

**5.** Dispositif de communication portable selon la revendication 4, dans lequel le potentiomètre électronique diminue progressivement la résistance en réponse à des impulsions de commande provenant du microprocesseur, augmentant ainsi progressivement le courant consommé par le circuit de charge de batterie.

**6.** Dispositif de communication portable selon la revendication 4, dans lequel le potentiomètre électronique est configuré pour augmenter cycliquement la résistance à travers une gamme de résistances, faisant ainsi passer le courant consommé par le circuit de charge de batterie à travers une gamme d'environ 0 Amps à un niveau de courant qui se traduit par une tension d'entrée au niveau de coupure basse tension.

**7.** Dispositif de communication portable selon la revendication 3, dans lequel le signal de tension de référence est fourni par le contrôleur de charge de batterie (30).

**8.** Dispositif de communication portable selon la revendication 3, dans lequel le circuit comparateur (50) comporte un circuit diviseur de tension pour dériver le signal de tension en réduisant la tension d'entrée.

**9.** Dispositif de communication portable selon la revendication 3, dans lequel le circuit de régulation (34) comporte un condensateur couplé entre une sortie du circuit comparateur (50) et un potentiel de masse, et pouvant fonctionner pour lisser les variations de la sortie du circuit comparateur.

**10.** Dispositif de communication portable selon la revendication 1, dans lequel la source d'alimentation externe comporte un bus informatique ayant un nœud d'alimentation.

**11.** Dispositif de communication portable selon la revendication 10, dans lequel le bus informatique de données est un bus série universel (35) (USB).

**12.** Dispositif de communication portable selon la revendication 3, dans lequel le circuit comparateur (50) présente une hystérésis, de sorte que le circuit comparateur (50) ne permet pas au contrôleur de charge de batterie (30) de charger la batterie rechargeable tant que la tension d'entrée n'atteint pas une quantité prédéterminée au-dessus du niveau de coupure basse tension.

**13.** Dispositif de communication portable selon la revendication 3, dans lequel le circuit comparateur (50) est configuré pour diminuer le courant consommé par le circuit de charge de batterie lorsque la tension d'entrée tombe en dessous d'un niveau de référence prédéfini.

**14.** Dispositif de communication portable selon la revendication 3, dans lequel :

le contrôleur de charge de batterie (30) comporte un circuit de coupure basse tension, le circuit de coupure basse tension étant configuré pour amener le contrôleur de charge de batterie à arrêter la charge de la batterie rechargeable (32) si la tension d'entrée tombe en dessous du niveau de coupure basse tension ; et
le circuit de régulation (34) étant configuré pour abaisser une sortie de courant du contrôleur de charge de batterie si la tension d'entrée tombe en dessous d'une limite prédéfinie, la limite prédéfinie étant au-dessus du niveau de coupure basse tension.

**15.** Procédé de charge d'une batterie rechargeable (32) d'un dispositif de communication portable, le procédé comprenant :

la réception, par un contrôleur de charge de batterie (30), d'énergie, à une tension d'entrée, provenant d'une source d'alimentation externe ;
l'utilisation, par le contrôleur de charge de batterie, de l'énergie pour charger la batterie rechargeable ;
le fait d'exiger, du contrôleur de charge de batterie, que la tension d'entrée reste au-dessus d'un niveau de coupure basse tension lors de la charge de la batterie rechargeable, dans lequel une tension d'entrée inférieure ou égale au niveau de coupure basse tension provoque l'arrêt du contrôleur de charge de batterie ; et
la régulation, par un circuit de régulation (34), du courant consommé par le contrôleur de charge de batterie (30) en réponse à la tension d'entrée, afin de maintenir la tension d'entrée au-dessus du niveau de coupure basse tension.

Fig. 1

Fig. 2

*Fig. 3*

*Fig. 4*

Fig. 5

Fig. 6

START

90 — CONNECTING BATTERY CHARGE
CONTROLLER TO EXTERNAL POWER
SUPPLY AND TO RECHARGEABLE BATTERY

92 — DETERMINING LOW VOLTAGE SHUTOFF LEVEL
FOR BATTERY CHARGE CONTROLLER

94 — MONITORING VOLTAGE PROVIDED TO
BATTERY CHARGE CONTROLLER

96 — MAXIMIZING CURRENT PROVIDED BY BATTERY
CHARGE CONTROLLER, WHILE KEEPING
VOLTAGE TO BATTERY CHARGE CONROLLER
ABOVE LOW VOLTAGE SHUTOFF LEVEL

DONE

*Fig. 7*

**EP 2 264 855 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6300744 B1
- US 20020130638 A1